Europäisches Patentamt

European Patent Office

Office européen des brevets

(11) Publication number: **0 397 183**
**A1**

## EUROPEAN PATENT APPLICATION

(21) Application number: **90108871.6**

(51) Int. Cl.⁵: **B01J 29/08**

(22) Date of filing: **11.05.90**

(30) Priority: **12.05.89 US 351116**

(43) Date of publication of application:
**14.11.90 Bulletin 90/46**

(84) Designated Contracting States:
**DE FR GB IT NL**

(71) Applicant: **W.R. Grace & Co.-Conn.**
**1114 Avenue of the Americas**
**New York New York 10036(US)**

(72) Inventor: **Roberie, Terry Glynn**
**2613 Liter Drive**
**Ellicott City, Maryland 21043(US)**

(74) Representative: **Abitz, Walter, Dr.-Ing. et al**
**Abitz, Morf, Gritschneder, Freiherr von**
**Wittgenstein Postfach 86 01 09**
**D-8000 München 86(DE)**

(54) **Catalytic compositions.**

(57) Crystalline aluminosilicate zeolite Y which contains phosphorus and its use in the preparation of hydrocarbon conversion catalysts.

EP 0 397 183 A1

## CATALYTIC COMPOSITIONS

The present invention relates to catalytically active zeolites, and more specifically to phorphorus/zeolite Y compositions which are active for the conversion of hydrocarbons.

Crystalline aluminosilicate zeolites, particularly synthetic faujasite, i.e. zeolite Y, have been widely used in the preparation of hydrocarbon conversion catalysts, such as catalytic cracking and hydrocracking catalysts.

Thermally and chemically modified Y-zeolites, such as ultrastable Y zeolite (USY) and calcined rare-earth exchanged Y zeolite (CREY) are included in many commercial hydrocarbon conversion catalysts that are used to convert heavy hydrocarbon feedstocks into more valuable products such as gasoline and diesel fuel.

More recently, Y-zeolite catalysts which include phosphorous or phosphorous compounds have been described in the patent literature.

EP 095 364 B1 discloses catalytic cracking catalysts that contain clay based and synthetic Y-zeolites which are modified by the addition of phosphorous to enhance catalytic activity for the conversion of hydrocarbon feedstocks.

EP 0 252 761 A2 discloses cracking catalysts that contain a pretreated phosphorous/ultrastably Y zeolite.

It is an object of the present invention to provide novel phosphorous containing Y-zeolite compositions.

It is another object to provide phosphorous containing Y-zeolites that may be readily converted into highly active phosphorous/ultrastable-Y hydrocarbon conversion catalysts.

It is a further object to provide an economic method by which phosphorous modified ultrastable-Y zeolite containing catalysts may be manufactured and used on a commercial scale.

These and still further objects will become readily apparent to one skilled-in-the-art from the following detailed description and specific examples.

Broadly, my invention contemplates the preparation of phosphorous modified Y-zeolites wherein a partially hydrogen, ammonium exchanged sodium Y zeolite (Na, H, NH$_4$Y) is combined with a phosphorus compound such as phosphoric acid NH$_4$ H$_2$ PO$_4$, (NH$_4$)$_2$ H PO$_4$ and NaH$_2$ PO$_4$ to obtain a novel phosphorus containing zeolite-Y composition that may be readily converted to phosphorus/ultrastable-Y zeolite (P/USY).

More specifically, I have found that highly active phosphorus/ultrastably-Y zeolites may be prepared by the following process:

1) A sodium Y-zeolite (NaY) having a unit cell dimension of about 24.63 to 24.72 Å is ion-exchanged and washed with an ammonium salt solution and water to obtain a partially exchanged Na, H, NH$_4$Y that contains 1.0 to 5.0, and preferably 2.5 to 4.5, weight percent Na$_2$O.

2) The Na, H, NH$_4$ Y is then combined with an aqueous phosphorus solution such as phosphate acid at a pH of about 4 to 7, and dried at a temperature of 20 to 350°C, preferably spray dried, to obtain a novel phosphorus containing Na, H, NH$_4$, Y zeolite (P/Na, H, NH$_4$ Y) that contains about 0.1 to 4 and more preferably 0.7 to 2 weight percent phosphorus expressed as P$_2$O$_5$.

3) The P/Na, H, NH$_4$ Y is then heated in the presence of steam (10 to 100%) at a temperature of 500 to 700°C for 0.5 to 2 hours to obtain a P/USY zeolite having a unit cell of about 24.45 to 24.60 Å and preferably 24.52 to 24.58 Å.

The P/USY zeolite obtained by the above process is particularly active for the catalytic cracking of hydrocarbons when combined with an inorganic oxide matrix such as silica, alumina, silica-alumina sols and gel and clay in accordance with the teaching of U.S. 3,650,988, U.S. 3,867,308, U.S. 3,957,689, CA 967,136 and U.S. 4,458,023. It is also contemplated that the P/USY may be exchanged with metal cations such as rare-earths (Ce, La, etc.), as well as Group II, VI and VIII metals such as Ni, Cr and Mg.

In a particularly preferred embodiment the P/USY, obtained in 3) above is combined with inorganic oxide matrix components such as clay and silica/alumina-sol in an aqueous slurry, which is then spray dried, and washed to remove Na$_2$O.

It is contemplated that the steam calcination step may take place during the manufacturing process or during use of the catalyst in a catalytic conversion process, such as fluid catalytic cracking (FCC).

The catalyst compositions contemplated herein will contain 10 to 80 weight percent P/USY, 3 to 30 weight percent alumina, silica or silica sol/gel binder and the balance clay (preferably kaolin). In addition the catalysts may contain particulate alumina, acid/thermal modified clay, additional zeolites/molecular sieves such as ZSM-5, zeolite Beta, USY, CREY, ALPO and SAPO, as well as combustion/oxidation additives such as Pt and/or Pd, and SOx conversion control sorbents such as RE/Al$_2$O$_3$, particularly La/Al$_2$O$_3$ composi-

tions.

The P/USY catalytic cracking compositions, when used under FCC reaction/regeneration conditions of 455 to 565°C/575 to 820°C to crack hydrocarbon feedstocks such as gas oil, residual oil and mixtures thereof, are particularly selective for the production of gasoline fractions. In addition, the compositions of the present invention find use as catalysts for hydrocracking, isomerization, and hydroprocessing.

Having described the basic aspects of the invention, the following examples are given to illustrate particular embodiments.

EXAMPLE I

Preparation of Na, H, NH₄ Y

20,000 g of NaY having a unit cell dimension of 24.65 Å was ion exchanged with a 10% solution of ammonium sulfate at 80°C for one-half hour and washed free of sulfate. The procedure was repeated, after which the sieve was dried twelve hours at 110°C.

The resulting product had the following characteristics:

| Chemical Analysis (Wt.%) | |
|---|---|
| SiO₂ | 71.37 |
| Al₂O₃ | 24.42 |
| Na₂O | 4.05 |
| TV | 26.71 |

Physical Properties
Unit Cell 24.70 Å

EXAMPLE II

Preparation of P/Na, H, NH₄ Y

14757 g of the Na, H, NH₄ Y obtained in Example I was added to 31285 g of water. To this was added 690 g of 20% H₃PO₄. The resulting mixture having a pH of 4.7 was thoroughly agitated and spray dried using a gas inlet temperature of 316°C and a gas outlet temperature of 149°C.

The resulting product had the following characteristics.

| Chemical Analysis (Wt.%) | |
|---|---|
| SiO₂ | 71.41 |
| Al₂O₃ | 25.13 |
| P₂O₅ | 0.80 |
| Na₂O | 3.88 |
| TV | 25.26 |

3

Physical Properties
Unit Cell 24.70 Å

## EXAMPLE III

### Preparation of P/USY

5000 g of P/Na, H, NH₄ Y of Example II was heated at 650°C in the presence of 100% steam for 1 hour.

The resulting product had the following characteristics.

| Chemical Analysis (Wt.%) | |
|---|---|
| $SiO_2$ | 71.41 |
| $Al_2O_3$ | 25.13 |
| $P_2O_5$ | 0.80 |
| $Na_2O$ | 3.88 |

Physical Properties
Unit Cell 24.54 Å

## EXAMPLE IV

### Properties of FCC Catalyst from P/USY

3035 g of the P/USY obtained in Example III was combined with 944 g of alumina powder, 6000 g of silica-alumina sol, and 1347 g clay. The mixture was spray dried and the resulting catalyst washed to reduce the soda level. The catalyst was dried 150 to 175°C for twelve hours before being steamed at 1500°F (815°C) for four hours and 1 atmosphere of steam partial pressure.

The resulting catalyst had the following properties.

| Physical Properties | |
|---|---|
| Steamed as above | 174 m²g |
| Fresh surface area (3 hrs. @ 1000°F) | 285 m²g |

## EXAMPLE V

### Evaluation of FCC Catalysts

Samples of catalysts prepared in Example IV were evaluated by using the procedure set forth by F. G. Ciapetta and D. S. Henderson, entitled "Microactivity Test For Cracking Catalysts", Oil and Gas Journal, Vol. 65, pages 89-93, October 16, 1967 under the following conditions.

(a) Evaluation at constant Catalyst to Oil Ratio:

Temperature 980° F

Catalyst/Oil Ratio 4

Feedstock Sour Import Heavy Gas Oil

Space Velocity (WHSV$^{-1}$) 30

The results are summarized in Table I below.

TABLE I

| Catalyst | Example IV | Control * |
|---|---|---|
| Conversion (wt.% of feed) | 71 | 62 |
| Gasoline $C_5$ + wt.% | 47.7 | 42.0 |
| LPG $C_1$-$C_4$ wt.% | 20.3 | 17.4 |
| Coke wt.% | 2.9 | 2.3 |
| $H_2$ wt.% | 0.11 | 0.08 |

* Catalysts of Example V contain USY in lieu of P/USY.

(b) Evaluation at constant Conversion

The evaluation procedure of (a) was repeated at a constant conversion.

The results are summarized in Table II below.

TABLE II

| Catalyst | Example IV | Control * |
|---|---|---|
| Conversion (wt.% of feed) | 68 | 68 |
| Gasoline $C_5$ + wt.% | 47.0 | 44.5 |
| LPG $C_1$-$C_4$ wt.% | 18.2 | 20.1 |
| Coke wt.% | 2.9 | 2.9 |
| $H_2$ wt.% | 0.102 | 0.097 |

* Catalysts of Example V contain USY in lieu of P/USY.

The above Examples clearly indicate that valuable FCC catalysts may be obtained using the teachings of my invention.

**Claims**

1. A composition comprising:

(a) ion exchanged sodium zeolite Y containing 2 to 5 weight percent $Na_2O$; and

(b) phosphorus in amounts ranging from 0.1 to 4.0 weight percent expressed as $P_2O_5$.

2. The composition of claim 1 having a P content of 0.7 to 1.5 weight percent expressed as $P_2O_5$.

3. A composition comprising phosphorus containing ultrastable Y zeolite wherein the phosphorus content ranges from 0.1 to 4.0 weight percent expressed as $P_2O_5$.

4. The composition of claim 3 wherein the phosphorus content ranges from 0.7 to 1.5 weight percent expressed as $P_2O_5$.

5. The composition of claim 3 obtained by heating the composition of claim 1 at a temperature of about

5

500 to 700° C in the presence of steam.

6. A catalyst comprising the zeolite-Y composition of claim 1 dispersed in an inorganic oxide matrix.

7. A catalyst comprising the zeolite Y composition of claim 3 dispersed in an inorganic oxide matrix.

8. A method for preparing a phosphorus Y-zeolite composition comprising:

(a) ion exchanging and washing a sodium Y zeolite to obtain an exchanged Y-zeolite having a $Na_2O$ content of 1 to 5 weight percent;

(b) combining reacting the exchanged zeolite with an aqueous solution of a phosphorus compound selected from the group consising of phosphoric acid, $(NH_4)_2 HPO_4$, $NH_4 H_2 PO_4$ and $Na H_2 PO_4$; and

(c) recovering a phosphorus containing Y-zeolite product having a phosphorus content of from about 0.1 to 4.0 weight percent expressed as $P_2O_5$.

9. The method of claim 7 wherein the product of step (b) is dried at a temperature of 90 to 400° C to a moisture level of 5 to 30 weight percent $H_2O$.

10. The method of claim 8 wherein the product is spray dried to obtain particles having a size range of 0.5 to 100 microns.

11. The method of claim 7 wherein the phosphorus compound is selected from the group consisting of phosphoric acid, $(NH_4)_2 HPO_4$, $NH_4 H_2 PO_4$, and $Na H_2 PO_4$ and the phosphorus content is 0.1 to 4.0 weight percent expressed as $P_2O_5$.

12. The method of claim 7 wherein the product is heated at a temperature of 500 to 750° C in the presence of 10 to 100 percent steam to obtain P/USY.

13. A method for the catalytic conversion of hydrocarbons which comprises reacting a hydrocarbon feedstock under catalytic conditions in the presence of the catalyst of claims 5 and 6.

14. The method of claim 12 wherein the catalytic conversion conditions are selected from the group consisting of catalytic cracking, hydrocracking, hydroprocessing, and isomerization.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 252 761 (EXXON) --- | | B 01 J 29/08 |
| D,A | EP-A-0 095 364 (EXXON) --- | | |
| A | US-A-4 115 424 (UNLAND et al.) ----- | | |
| | | | **TECHNICAL FIELDS SEARCHED (Int. Cl.5)** |
| | | | B 01 J |

The present search report has been drawn up for all claims

| Place of search | Date of completion of the search | Examiner |
|---|---|---|
| THE HAGUE | 22-08-1990 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)